# EUROPÄISCHE PATENTSCHRIFT

(11) **EP 4 058 785 B1**
(45) Veröffentlichungstag und Bekanntmachung des Hinweises auf die Patenterteilung: **01.01.2025**
(21) Anmeldenummer: 20804550.0
(22) Anmeldetag: 12.11.2020
(51) Int. Cl.: G01N 21/51, G01N 21/15, G01N 21/47, G01N 21/49, G01N 21/53, G01N 21/84, G01N 21/85, G01N 15/00, G01N 15/02

(54) **SENSOR UND VORRICHTUNG ZUR ERFASSUNG DES KRISTALLISATIONSGRADES**
SENSOR AND DEVICE FOR DETECTING THE DEGREE OF CRYSTALLIZATION
CAPTEUR ET DISPOSITIF POUR DÉTECTER UN DEGRÉ DE CRISTALLISATION

(30) Priorität: 14.11.2019 DE 102019130781
(43) Veröffentlichungstag der Anmeldung: 21.09.2022
(73) Patentinhaber: Hochschule Mannheim, 68163 Mannheim (DE); Südzucker AG, 68165 Mannheim (DE)
(72) Erfinder: MATTHIAS, Rädle, 67273 Weisenheim/Berg (DE); LUKAS, Schmitt, 69469 Weinheim (DE); STEFAN, Schorz, 67304 Eisenberg (DE); STEFAN, Frenzel, 69469 Weinheim (DE)
(74) Vertreter: Blumbach · Zinngrebe Patentanwälte PartG mbB
(86) Internationale Anmeldenummer: PCT/EP2020/081888
(87) Internationale Veröffentlichungsnummer: WO 2021/094443

(56) Entgegenhaltungen:
- US-A- 4 672 218
- US-A- 4 707 134
- US-A- 6 118 520
- US-A1- 2002 003 620
- US-A1- 2003 075 478
- US-A1- 2007 071 648
- US-A1- 2016 097 717
- US-A1- 2017 240 494
- US-A1- 2019 024 196

## Beschreibung

### Gebiet der Erfindung

Die Erfindung betrifft eine Vorrichtung zur Erfassung des Kristallisationsgrades.

### Hintergrund und allgemeine Beschreibung der Erfindung

In der Prozessanalyse verschiedenster Prozesse tritt die Frage auf, welchen Anteil Partikel in einem Medium einnehmen, also beispielsweise hinsichtlich des Volumenanteils im Medium oder aber auch hinsichtlich der Größe der Partikel.

Es ist allgemeine Auffassung, dass bei großen Partikeln und besonders bei Partikeln, die nicht einigermaßen kugelförmig sind, eine Analyse der Größe dieser Partikel nicht oder nur mit erheblichem Aufwand möglich ist, da diese anisotrop streuen. Ein einfacher Aufbau wie für eine Messung mittels "Direct Light Scattering" (DLS) wird für nicht anwendbar erachtet.

Noch schwieriger wird es, wenn für diese Prozesse die in dem Medium existente disperse Oberfläche ermittelt werden soll. Die disperse Oberfläche bezeichnet die Fläche der gesamten Oberfläche aller in einem Volumen vorhandenen Feststoffe, wie Partikel oder Kristalle. Es ist also nicht dieselbe Größe wie beispielsweise die Volumenkonzentration, die sich besonders bei komplexen Feststoffen, wie insbesondere Kristallen, deutlich unterscheiden kann. Die disperse Oberfläche ist dann aufgrund des anisotropen Streuverhaltens schwierig quantitativ zu erfassen. So ändert sich die Oberfläche einer Menge an Feststoffen mit deren Größe, und damit auch deren Rückstreuverhalten.

Bekannte Sensoren vermögen dabei nicht, eine direkte Relationsgröße bzw. ein Maß für die disperse Oberfläche bereitzustellen, oder dies jedenfalls nicht für höhere Konzentrationen, d.h. größeren dispersen Oberflächen im Medium, oder aber sind erheblich teurer und aufwändiger.

Dies wird am Beispiel der Zuckerherstellung verdeutlicht. In der Zuckerindustrie wird aus Zuckerrüben mittels Extraktion und Kristallisation Kristallzucker gewonnen, wobei je nach Werk zwischen 5.000 t und 16.000 t Rüben täglich verarbeitet werden. Der in den Zellen der Rübe vorhandene Zucker wird mit Wasser, meist Kondensat, extrahiert und anschließend kristallisiert.

Eine möglichst hohe Ausbeute und ein möglichst hoher Durchsatz bei möglichst geringem Energieeinsatz in der Kristallisation ermöglicht es, weniger Rüben einkaufen zu müssen und weiterhin Kosten an Energie zu sparen. Die Optimierung der Produktion wird jedoch bereits seit Jahren betrieben, sodass eine weitere Verbesserung neuer Anstöße bedarf. In der Produktion zeigen sich gegenläufige Tendenzen und Effekte auf Veränderungen der Prozessbedingungen. So kann durch eine höhere Lösungsmittelmenge, also Wasser, die Ausbeute erhöht werden, das zusätzlich zugeführte Wasser muss allerdings bei der Kristallisation verdampft werden. Die Kosten der benötigten Energie sind je nach Werk unterschiedlich. Ein günstiger Energieträger ist Braunkohle, die vorwiegend in Ostdeutschland abgebaut und verwendet wird. Wegen der geringen Energiedichte kann sie nicht wirtschaftlich über größere Strecken transportiert werden und wird daher in Westdeutschland nicht eingesetzt. Außerdem kommen zunehmend Aspekte wie "Carbon footprint" in die Diskussion, wo Braunkohle besonders schlecht abschneidet. Demgegenüber ist die Verwendung von Gas oder Öl teurer.

Ebenfalls ist zu berücksichtigen, dass sich die Effizienz der Kristallisationsanlagen verschlechtert, wenn die Rübenverarbeitung der Anlage die Sollkapazität übersteigt. Derzeit ist es in einigen Werken üblich, die Anlagen über ihrer Sollkapazität hinaus zu überfahren, damit die vorhandenen und geernteten Rüben verarbeitet werden können. Um ein Überfahren zu verhindern müsste die Kampagnendauer, also die Zeit der Rübenverarbeitung, erhöht werden, was wegen der Verderblichkeit der Zuckerrüben nicht leicht möglich ist.

Die Kristallisation ist eines der ältesten und auch wichtigsten Trenn- und Reinigungsverfahren. Salz und Zucker zählen dabei zu den bekanntesten Produkten des Alltags, welche über eine Kristallisation gewonnen werden. Die Triebkraft der Kristallisation ist die Übersättigung der Mutterlösung. Dabei ist eine größere Konzentration des zu kristallisierenden Stoffes in der Flüssigkeit gelöst als es dem Gleichgewicht entspricht. Eine Übersättigung kann durch zwei Vorgänge abgebaut werden: das Wachstum vorhandener Kristalle oder die Bildung neuer Keime. Bis zu einer gewissen Höhe der Übersättigung spricht man vom metastabilen Bereich. Unterhalb der metastabilen Übersättigung findet keine Keimbildung sondern nur Kristallwachstum statt. Die Breite der metastabilen Zone kann durch Zugabe von arteigenen oder fremden Partikeln beeinflusst werden, dies wird als Impfen bezeichnet. Wesentliche Ziele technischer Kristallisationsprozesse ist die Einstellung einer gewünschten Partikelgröße und Größenverteilung, Kristallform und ggf. Modifikation.

Die Übersättigung kann, je nach Abhängigkeit des Gleichgewichts von den Prozessparametern, auf verschiedene Weisen hervorgerufen werden: bei der Kühlungskristallisation nutzt man die verminderte Löslichkeit bei Temperaturerniedrigung, bei der Verdampfungskristallisation wird das Lösungsmittel verdampft und dadurch die Löslichkeitsgrenze überschritten. Darüber hinaus kann eine weitere Komponente hinzugegeben werden, welche sich mit der Zielkomponente verbindet. Die Verbindung aus beiden Stoffen besitzt eine niedrigere Löslichkeit und fällt als Niederschlag aus (Fällungskristallisation). Zuletzt kann bei der Antisolventkristallisation die Zugabe eines weiteren Lösungsmittels die Löslichkeit der Zielkomponente verringern, was dann zu einem Ausfall der Zielkomponente führt. Welches dieser Verfahren genutzt wird hängt von einer Vielzahl an Faktoren ab, zu denen zum einen ökonomische Aspekte aber auch die Empfindlichkeit der Zielkomponenten zählt.

Die sogenannte Sättigungs-Lösekurve zeigt den Verlauf der Sättigungskonzentration mit der Temperatur. Unterhalb dieser Kurve befindet sich der ungesättigte Bereich und oberhalb liegt der Übersättigungsbereich, der instabil ist und eine Kristallisation möglich ist. Die Übersättigungskurve grenzt den metastabilen Bereich vom instabilen Bereich ab. Im metastabilen Bereich ist eine Kristallisation nur möglich, wenn Kristalle schon vorhanden sind. Dieser Bereich wird genutzt um Kristalle wachsen zu lassen. Bei Überschreitung dieser Kurve ist auch eine Kristallneubildung möglich.

Um eine Lösung in den übersättigten Zustand zu bringen, wird typischerweise eine von drei Möglichkeiten ausgewählt. Erstens die Verdampfungskristallisation, d.h. Entzug von Lösungsmittel und damit Erhöhung der Konzentration an gelöster Substanz bis zum Überschreiten der Sättigungskonzentration. Zweitens die Kühlungskristallisation, d.h. Absenkung der Sättigungskonzentration bis die Lösungskonzentration unterschritten wird. Drittens die Vakuumkristallisation, d.h. ein Mix aus beiden Verfahren, bei dem durch Anlegen von Vakuum Lösungsmittel entzogen wird und die Lösung sich abkühlt.

Vor allem im Bereich der pharmazeutischen und chemischen Industrie stellt die Kristallisation ein unverzichtbares Werkzeug dar. Und auch in der Lebensmittelindustrie (im speziellen die Zuckerindustrie) wird die gezielte Kristallisation eingesetzt. Die Reinstoffdarstellung stellt dabei nur einen kleinen Teil der möglichen Verwendung der Kristallisation dar.

Die gezielte Kontrolle der Kristallstruktur (Polymorphie) sowie Kristallgröße und Kristallgrößenverteilung haben oftmals einen entscheidenden Einfluss auf die chemischen und physikalischen Eigenschaften der Stoffe. So bestimmt beispielsweise die Größe von Eiskristallen in Speiseeis die sensorischen Eigenschaften, wobei kleine Kristalle das Eis cremiger erscheinen lassen.

In der pharmazeutischen Industrie ist es beispielsweise gewünscht, dass die gewonnenen Wirkstoffkristalle eine gleichbleibende Größe und Form aufweisen. Abweichungen beeinflussen z. B. das Freisetzungsverhalten und damit die Wirksamkeit der Produkte. Sie sind daher unerwünscht und können gesundheitlichen und/oder wirtschaftlichen Schaden verursachen. Eine zuverlässige Steuerung und gleichermaßen Überwachung des Kristallwachstums, der Kristallform, seiner Oberfläche und ggf. Polymorphie sind somit essentielle Bestandteile jedes Kristallisationsverfahrens.

US 2017/240494 A1 offenbart eine Vorrichtung zur Ausgabe des aktuellen Kristallisationsgrades eines Mediums umfassend ein Messgerät mit einer Lichtquelle zum Auslassen einer Primärstrahlung in das Medium, einen Lichtsensor zur Aufnahme zumindest eines Teils der in dem Messvolumen erzeugten Sekundärstrahlung, wobei die optische Austrittsachse der Lichtquelle im Wesentlichen parallel zu der optischen Eintrittsachse des Lichtsensors liegt und wobei die Primärstrahlung kegelförmig als Primärstrahlkegel bereitgestellt wird, das Messgerät ferner umfassend eine Auswertungseinrichtung zur Berechnung des Kristallisationsgrades.

Sowohl bei chargenweisen als auch kontinuierlicher Kristallisation geben die gängigen Off- und Atline Verfahren zur Überwachung, wie z.B. eine Probenentnahme, nur eine verzögerte Rückmeldung über den Systemzustand und die Produktqualitätsparameter. Nachträgliche Prozesskorrekturen sind somit nur noch bedingt wirksam und ggf. mit hohem Mehraufwand verbunden. Insbesondere für kontinuierliche Kristallisationsverfahren ist die verzögerungsfreie Kenntnis des aktuellen Prozess- und damit Produktzustands unerlässlich. Sensorik, wie die im Folgenden vorgestellte Vorrichtung, die insbesondere zur Inline-Überwachung geeignet ist, kann einen erheblichen Zeitvorteil bereitstellen und ermöglicht somit im Zusammenspiel mit der Prozesssteuerung eine dynamische und schnelle Anpassung an Prozessabweichungen. Dies vermag eine gleichbleibende Produktqualität zu gewährleisten Ausfallquoten zu minimieren.

Um im gesamten Apparatevolumen identische Produktqualität zu erhalten, sind lokale Übersättigungsspitzen zu vermeiden. Somit ist eine gute Durchmischung vorteilhaft.

Die Erfindung hat sich nun mit der Frage beschäftigt, wie Prozessparameter eines Kristallisationsprozesses, und allgemein von Prozessen, bei welchen verschiedenphasige Fluide oder Mischfluide mit verschieden-viskosen Teilfluiden koexistieren, verbessert bzw. kontrolliert werden können.

Im Rahmen der Erfindung wird gezeigt werden, dass eine möglichst einfache Abschätzung der dispersen Oberfläche eines Mediums ausgeben zu können, welche schnell und mit wenig komplizierter Messtechnik erhalten werden kann, dabei als ein Schlüsselelement erkannt werden konnte. Die Ausgabe der dispersen Oberfläche des Mediums, jedenfalls zumindest in Form einer Trenddarstellung, also der Darstellung der Veränderung über die Zeit, stellt darin daher einen Teilaspekt der Aufgabe dar. Dies stellt eine enorme Verbesserung auch in wirtschaftlicher Hinsicht gegenüber dem bekannten Stand der Technik dar.

Diese Aufgabe wird durch die Gegenstände der unabhängigen Ansprüche gelöst. Vorteilhafte Weiterbildungen der Erfindung sind Gegenstände der abhängigen Ansprüche.

Die in dieser Beschreibung vorgeschlagenen Verbesserungen konzentrieren sich in technischer Hinsicht neben anderen Aspekten darauf, die disperse Oberfläche quantitativ zu erfassen, so dass jedenfalls ein Wert abgeleitet werden kann, ob sich der Anteil der dispersen Oberfläche im Medium in einem Zeitverlauf erhöht oder verringert.

Dabei wird die Erfindung anhand des Kristallisationsgrades eines Mediums beschrieben, bei welchem typischerweise im fortschreitenden Prozess der Kristallisation aus der flüssigen Phase feste Bestandteile ausfällen.

Das erfindungsgemäße Messgerät für die Erfassung des Kristallisationsgrades eines Mediums umfasst eine Strahlungsquelle zum Auslass einer Primärstrahlung in das Medium, wobei die Primärstrahlung in einer Primärstrahlrichtung ausgesendet wird und aus der Strahlungsquelle austritt. Die Strahlungsquelle ist eine Lichtquelle, wobei in einer besonders bevorzugten Form des Aufbaus die Strahlungsquelle lediglich einen Strahlungsauslass und gegebenenfalls strahlformende Elemente - wie eine Linse - umfasst, und ein Strahlungserzeuger beabstandet von der Strahlungsquelle angeordnet ist, welcher die Strahlung erzeugt und an der Strahlungsquelle bereitstellt. Beispielsweise kann zu diesem Zweck die Strahlungsquelle über eine Glasfaserverbindung mit einer Lampe oder einem Laser verbunden sein.

Die Strahlungsquelle ist dazu hergerichtet, die Primärstrahlung so in das Medium einzustrahlen, dass ein räumlich begrenzter Abstrahlbereich bereitgestellt wird zur Erzeugung von Sekundärstrahlung in dem Abstrahlbereich. Mit anderen Worten definiert die Strahlungsquelle durch ihre Form, durch eine strahlformende Einrichtung, durch den Einstrahlwinkel in das Medium oder ihre Apertur, oder durch die Wahl der Wellenlänge oder des Wellenlängenbereichs der eingesetzten Strahlung, oder vor allem auch einer Kombination der vorgenannten Möglichkeiten, den räumlich begrenzten Abstrahlbereich in dem Medium. Der räumlich begrenzte Abstrahlbereich weist dabei bevorzugt scharf getrennte Ränder und eine maximale Eindringtiefe auf, die Strahlung tritt kegelförmig aus der

Strahlungsquelle aus und bestrahlt eine bestimmte Tiefe t in dem Medium. Dies bildet den räumlich begrenzten Abstrahlbereich. Die vorgestellte Bildung des Abstrahlbereichs durch die Gestaltung der Strahlungsquelle hat den Vorteil, dass die Ränder des Abstrahlbereichs nicht durch physische Barrieren gebildet werden müssen, welche nicht nur die Strömung im Medium beeinflussen würden und Konzentrationsschwankungen im Medium zu erwarten wären, sondern solche physischen Barrieren wären auch anfällig für ein "Ausfrieren" der zu untersuchenden Objekte wie z.B. Feststoffe an diesen Barrieren, also beispielsweise einer dortigen Kristallbildung. Vielmehr werden die räumlichen Grenzen des Abstrahlbereichs bereits durch die Definition der Ausbreitung der Primärstrahlung gebildet, so dass der Aufbau nur eine Messung innerhalb des so definierten Abstrahlbereichs zulässt.

Die Beschränkung des Abstrahlbereichs auf ein wohldefiniertes Volumen im Medium ist dabei die Basis und Grundlage einer kontinuierlichen Messung.

So ist die korrekte Einstellung und Auswahl des Abstrahlbereichs, also der korrekten Formung der Ausbreitung und Ausbreitungsrichtung und der Begrenzung bzw. Einstellung der Reichweite der Primärstrahlung, eine der Grundlagen für die verbesserte Messung.

Nun geschieht also Folgendes: Die Strahlungsquelle emittiert Strahlung in den Abstrahlbereich und beleuchtet dieses gewissermaßen. Sofern sich Festkörper bzw. die zu untersuchenden Objekte (können auch Tropfen in Gas sein) in dem Abstrahlbereich aufhalten, werden diese von der Strahlungsquelle beleuchtet. Diese senden dadurch Sekundärstrahlung aus, beispielsweise wird Primärstrahlung reflektiert, oder es wird Strahlung remittiert oder die Primärstrahlung an dem Objekt gebrochen und zu Sekundärstrahlung. Die Sekundärstrahlung kann homogen in alle Raumrichtungen verteilt werden, je nach Strahlungsquelle und Geometrie des Messaufbaus kann hierbei auch ein Raumwinkelbereich eine höhere Strahlungsleistung der Sekundärstrahlung erhalten. Prinzipbedingt ist es für den erfindungsgemäßen Aufbau daher besonders vorteilhaft, wenn die Sekundärstrahlung keinen allzu großen Weg durch das Medium zurückzulegen hat, da die Ausbreitungsentfernung der Sekundärstrahlung begrenzt ist und bei größerem Abstand nur einen kleineren Raumwinkel der Sekundärstrahlung aufnimmt.

Des Weiteren ist es vorteilhaft, wenn das Medium durchmischt wird bzw. eine Strömung aufweist, so dass ein Durchfluss von zu untersuchenden Objekten durch den Messbereich festgestellt werden kann. Andererseits ist das für das vorliegende Messverfahren kein erforderliches Kriterium. Wenn sich im Messbereich weitere zu untersuchenden Objekte aufhalten bzw. sich dort bilden oder wachsen steigt die Rückstrahlung zum Strahlungsempfänger beispielsweise proportional zur dispersen Oberfläche, die im Messvolumen vorliegt.

Das Messgerät weist hierzu einen Strahlungsempfänger zur Aufnahme zumindest eines Teils der in dem Messvolumen erzeugten Sekundärstrahlung auf. Der Strahlungsempfänger weist dabei eine Empfängerapertur auf, die einen Eintrittsbereich definiert, aus dem der Strahlungsempfänger Strahlung aus dem Medium empfangen kann.

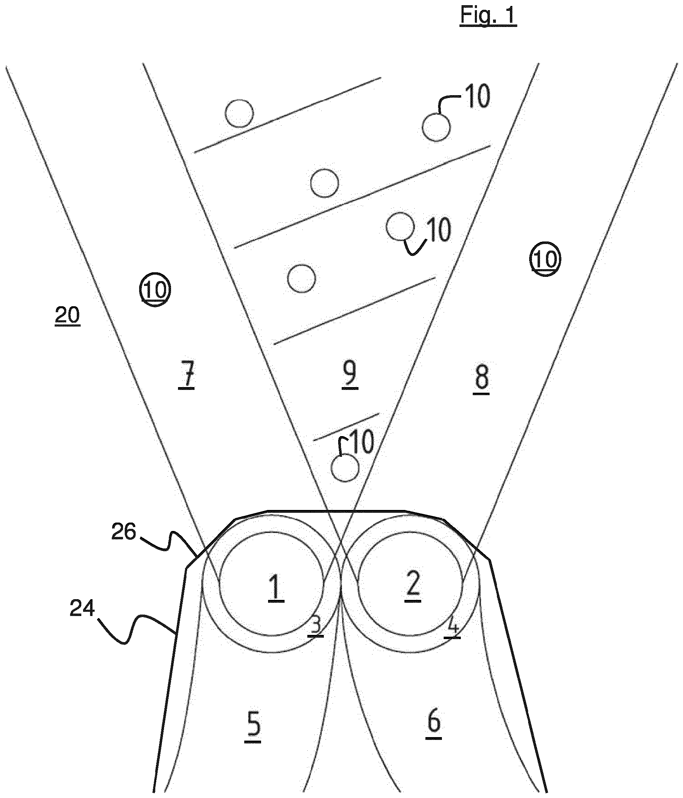

In einem Beispiel für das Verständnis der Erfindung sendet die Strahlungsquelle kegelförmig Strahlung aus und der Strahlungsempfänger weist einen kegelförmigen Empfangsbereich auf. Diese beiden Kegel überschneiden sich in dem so definierten Messvolumen. Der Strahlungsempfänger kann dann nur aus dem Messvolumen, also der Schnittmenge zwischen den vorgenannten Kegeln, Sekundärstrahlung empfangen. Dies wird in Figur 1 in weiteren Details zum Verständnis der Erfindung erläutert.

Der Strahlungsempfänger ist außerhalb der Primärstrahlrichtung angeordnet, er wird also nicht direkt von Primärstrahlung beleuchtet. Vielmehr ist der Strahlungsempfänger hergerichtet, die Sekundärstrahlung aufzunehmen und weiterzuleiten und/oder ein Ausgabesignal auszugeben.

Bei dem Messgerät für die Erfassung des Kristallisationsgrades eines Mediums und/oder für die Erfassung der dispersen Oberfläche im Medium handelt es sich besonders bevorzugt um eine Eintauchsonde, die in das Medium eingetaucht wird, so dass die Eintauchsonde vom Medium teilweise umgeben ist und mit dem Medium in unmittelbarem Berührkontakt ist. Das Messgerät kann auch an einer Wandung bzw. einem Sichtfenster angeordnet sein und von außen in das Medium einstrahlen, um das Messvolumen innerhalb des Mediums bereitzustellen.

Um die mit der vorliegenden Erfindung besonders einfach realisierbare Messung zu ermöglichen, ist der räumlich begrenzte Abstrahlbereich bzw. das räumlich begrenzte Abstrahlvolumen beispielsweise eine in Abhängigkeit des Reflexionsvermögens des Mediums einstellbare Größe. Angepasst an das Medium wird somit ein wohldefiniertes Volumen mit einer Eindringtiefe T und einer maximalen Breite B ausgeleuchtet. Das Messvolumen ist insbesondere vor einer Auswertung der mit der Messsonde erhaltenen Signale zu bestimmen, da von der Größe des Messvolumens unmittelbar die erhaltene disperse Oberfläche pro Volumen abhängt.

Für den Erhalt eines verwendbaren Ergebnisses ist es vorteilhaft, wenn der Abstrahlbereich und der Empfangsbereich nur teilweise überlappen. Bei teilweiser Überlappung wird ein Partikel, Festkörper oder allgemein ein zu untersuchendes Objekt daher zunächst in den Strahlungskegel eintreten und mit definierter Helligkeit in das Messvolumen eintreten. Ein zu untersuchendes Objekt wird dann auch auf dem weiteren Weg aus dem Messvolumen austreten, und dennoch im Empfangsvolumen bleiben. Die Helligkeitsänderungen heben sich dann noch deutlicher vom Rauschen ab und verbessern insgesamt die erzielbare Messauflösung.

Das Messvolumen wird in vorteilhafter Weise durch das Schnittvolumen zwischen dem Abstrahlbereich der Strahlungsquelle und dem Erfassungsbereich des Strahlungsempfängers definiert. Mit anderen Worten ist das Messvolumen bevorzugt gebildet aus einem Teilbereich des Abstrahlbereichs, welches mit einem Teilbereich des Erfassungsbereichs des Strahlungsempfängers überlappt. Der Teilbereich des Abstrahlbereichs zur Bildung des Messvolumens ist bevorzugt kleiner als der Abstrahlbereich selbst. Der Teilbereich des Erfassungsbereichs zur Bildung des Messvolumens ist ebenfalls bevorzugt kleiner als der Erfassungsbereich selbst. Die nur teilweise Überlappung des Abstrahlbereichs mit dem Erfassungsbereichs verbessert insbesondere das erhaltene Messsignal und/oder das Signal-zu-Rausch-Verhältnis des Messsystems und verbessert somit die Auflösung und/oder Sensitivität des Messsystems.

Die Strahlungsquelle und/oder der Strahlungsempfänger können bevorzugt mit strahlformenden Elementen, also insbesondere einer Strahlenoptik ausgerüstet sein, wobei die Primärstrahlung kegelförmig als Primärstrahlkegel bereitgestellt wird

Der Strahlungsempfänger ist bevorzugt dazu hergerichtet, die oder einen Teil der Rückstreuung der Primärstrahlung aus dem Messvolumen zu erfassen, wobei die Rückstreuung insbesondere aus dem Messvolumen reflektierte, remittierte oder gebrochene Strahlung umfasst bzw. daraus besteht.

Der Strahlungsempfänger ist ferner bevorzugt benachbart zu der Strahlungsquelle angeordnet. Dies ist besonders interessant, wenn der Strahlungsempfänger überwiegend Rückstreuung auffängt und die Eindringtiefe der Primärstrahlung in das Medium gering ist. Beispielsweise für diesen Fall ist es vorteilhaft, den Strahlungsempfänger benachbart zu der Strahlungsquelle anzuordnen um eine optimale Ausbeute des Sekundärlichts zu gewährleisten.

Mit anderen Worten ist der Strahlungsempfänger seitlich versetzt neben der Strahlungsquelle angeordnet, so dass die optische Austrittsachse der Strahlungsquelle parallel (oder nahezu parallel) zu der optischen Eintrittsachse des Strahlungsempfängers liegt. Beispielsweise wird die optische Austrittsachse der Strahlungsquelle so definiert, dass sie senkrecht auf dem Austrittsfenster der Strahlungsquelle liegt. Ist das Austrittsfenster der Strahlungsquelle gekrümmt, also beispielsweise sphärisch, so geht die optische Austrittsachse durch den Mittelpunkt bzw. den höchsten Punkt des Austrittsfensters. Dasselbe gilt für den Strahlungsempfänger hinsichtlich der Lage der optischen Eintrittsachse, d.h. diese liegt entweder senkrecht auf dem Eintrittsfenster des Strahlungsempfängers oder geht durch den Mittelpunkt bzw. den höchsten Punkt des Eintrittsfensters.

Wenn das Messvolumen vollständig im Abstrahlbereich enthalten ist, also deckungsgleich zum Abstrahlbereich ist oder jedenfalls keinen Anteil mehr außerhalb des Abstrahlbereichs aufweist, dann ist die Wahrscheinlichkeit größer, dass Sekundärstrahlung beispielsweise durch Mehrfachreflexion in das Messvolumen und in die Strahlungsempfänger eintritt, obwohl sich kein zu messendes Objekt im Messvolumen aufhält. Dies hat einen Einfluss auf die Genauigkeit und/oder die Auflösung der Messung. Daher ist es vielmehr besser, wenn das Messvolumen mit einem Teilvolumen außerhalb des Abstrahlvolumens angeordnet ist und möglichst auch nur ein Teilvolumen des Abstrahlvolumens umfasst. Dies verbessert die Auflösung, so dass reproduzierbare und zuverlässige Messungen mit der Sonde ermöglicht werden.

Die Strahlungsquelle kann mit einem Strahlungserzeuger verbunden werden, welcher die Primärstrahlung erzeugt und an der Strahlungsquelle bereitstellt. Beispielsweise kann hierfür eine faseroptische Verbindungsleitung vorgesehen sein. Dies erlaubt einen noch kompakteren Aufbau des Messgeräts, da dann in der Messspitze - die in bestimmten Anwendungsfällen dazu hergerichtet ist, in das Medium einzutauchen - eine kompaktere Anordnung realisiert werden kann.

Die Strahlungsquelle kann dazu hergerichtet sein, inkohärentes Licht zu emittieren. Es kann aber auch kohärente Strahlung wie von einem Laser als Primärstrahlung eingesetzt werden.

Das Medium umfasst Kristalle, welche disperse Oberfläche aufweisen.

Die Kristalle werden mit der Primärstrahlung beleuchtet und senden daraufhin die Sekundärstrahlung aus.

In vorteilhafter Weise ist die Strahlungsquelle gemeinsam mit dem Strahlungsempfänger in einem gemeinsamen Sondengehäuse angeordnet und beherbergt. Das Sondengehäuse kann insbesondere eine flach zulaufende und/oder strömungsgünstige Gehäusespitze aufweisen.

Die Strahlungsquelle kann des Weiteren eine Sendefaser, einen Glasstab oder beispielsweise eine Glasplatte umfassen. Aus praktischen Gründen wird einer Sendefaser bislang der Vorzug gegeben. Analog kann der Strahlungsempfänger eine Empfangsfaser, einen Glasstab oder eine Glasplatte umfassen.

Die Strahlungsquelle und/oder der Strahlungsempfänger können von einer Ummantelung umgeben sein, welche ggf. auch Cladding genannt wird. Nicht zuletzt dient die Ummantelung auch dazu, dass die Strahlung nur an dem dafür vorgesehenen Austritt der Strahlungsquelle ausgelassen wird.

In einer bevorzugten Bauform liegt die Ummantelung der Strahlungsquelle an die Ummantelung des Strahlungsempfängers benachbart an. Das benachbarte Anliegen der beiden Ummantelungen stellt in diesem Fall daher den geringstmöglichen Abstand zwischen Strahlungsquelle und Strahlungsempfänger dar. Des Weiteren kann die Ummantelung so ausgestaltet sein, dass die Ummantelung des Strahlungsempfängers sich mit der Ummantelung der Strahlungsquelle verbindet, so dass zwischen Strahlungsquelle und Strahlungsempfänger eine Lage der Ummantelung angeordnet ist. Dies stellt dann eine gemeinsame Ummantelung von Strahlungsquelle und Strahlungsempfänger dar, so dass die Strahlungsquelle an die gemeinsame Ummantelung angrenzt, und die gemeinsame Ummantelung wiederum an den Strahlungsempfänger.

Der Abstand zwischen Strahlungsquelle und Strahlungsempfänger beträgt in einem Beispiel 0,5mm oder weniger, bevorzugt 100 µm oder weniger, weiter bevorzugt 50 µm oder weniger. Mit anderen Worten sind Austrittsfenster und Eintrittsfenster bevorzugt nah nebeneinander angeordnet und in dieselbe oder nahezu dieselbe Richtung ausgerichtet, wobei zwischen dem Austrittsfenster und dem benachbart dazu angeordneten Eintrittsfenster ein Abstand von 0,5 mm oder weniger, bevorzugt 100 µm oder weniger, weiter bevorzugt 50 µm oder weniger vorzufinden ist. Obzwar der Abstand zwischen Austrittsfenster und Eintrittsfenster durchaus klein, ggf. sogar so klein wie technisch realisierbar, gewählt werden kann, ist es vorteilhaft, wenn das (unter anderem aus der Anordnung resultierende) Strahlungsvolumen nur teilweise, aber nicht vollständig, mit dem Empfangsvolumen überlappt beziehungsweise nicht deckungsgleich zum Empfangsvolumen ist.

Das Messgerät umfasst einen weiteren Strahlungsempfänger, welcher beabstandet von der Strahlungsquelle und/oder dem Strahlungsempfänger angeordnet ist. Dies ermöglicht beispielsweise vergleichende Messungen, es kann aber auch die Genauigkeit verbessern bspw. eine Kontrollmessung ermöglichen. Mit anderen Worten kann gerade die verschiedenartige Teilüberdeckung des Abstrahlvolumens mit dem ersten Empfangsvolumen einerseits und mit dem zweiten Empfangsvolumen andererseits zwei verschiedenartige Messergebnisse einer zeitgleich durchgeführten Messreihe bereitstellen und somit das Messresultat verändern bzw. erhöhen und/oder eine zusätzlich Information bereitstellen.

Alternativ oder kumulativ zu dem weiteren Strahlungsempfänger umfasst das Messgerät auch eine weitere Strahlungsquelle beabstandet von der Strahlungsquelle umfassen. Wenn von der weiteren Strahlungsquelle ein Primärlicht beispielsweise zeitlich alternierend oder mit verschiedener Wellenlänge (und dann auch gleichzeitig) im Vergleich zu der Strahlungsquelle emittiert wird, kann auch mittels des Aufbaus mit zwei Strahlungsquellen eine Vergleichsmessung durchgeführt werden und/oder die Genauigkeit des Messgeräts verbessern. Mit anderen Worten kann gerade die verschiedenartige Teilüberdeckung der ersten Abstrahlvolumens mit dem Empfangsvolumen einerseits und des zweiten Abstrahlvolumens mit dem Empfangsvolumen das Messergebnis verändern bzw. erhöhen und/oder eine zusätzlich Information bereitstellen.

Das räumlich begrenzte Messvolumen wird insbesondere dadurch räumlich begrenzt, dass die maximale Eindringtiefe der Primärstrahlung ausgewählt und/oder an das Medium angepasst wird. So konnte festgestellt werden, dass beispielsweise im Falle von Wasser als Medium insbesondere durch Auswahl der Wellenlänge der eingesetzten Primärstrahlung eine Begrenzung der Reichweite erreicht werden kann, wenn beispielsweise ein Wellenlängenbereich ausgewählt wird, bei welchem das Medium eine besonders hohe Absorptionsrate aufweist. Hierbei wird beispielsweise bei einer wässrigen Suspension ein Wellenlängenbereich der Primärstrahlung im Bereich von 800 nm bis 1.600 nm als vorteilhaft erachtet. Beispielsweise kann der Wellenlängenbereich der Primärstrahlung von 1.100 bis 1.300 nm, oder auch 1.200 bis 1.300 nm, oder im Bereich von 1.400 bis 1.600 nm, oder im Bereich von 800 bis 900 nm vorteilhaft sein. Die Grundidee der Erfindung kann aber auch bei anderen Wellenlängen, wie im Mittelinfrarot, oder im Ultraviolett unterhalb von 200 nm zur Anwendung kommen. Durch die Begrenzung des Eindringvermögens der Strahlung in das Medium machen näherliegende Partikel einen höheren Lichtanteil in dem erhaltenen Gesamtsignal aus als fernerliegende Partikel.

Die Erfindung umfasst eine Vorrichtung zur Ausgabe des aktuellen Kristallisationsgrades eines Mediums, umfassend das Messgerät wie zuvor beschrieben, sowie einen Strahlungserzeuger zur Bereitstellung der Primärstrahlung an der Strahlungsquelle und eine Auswertungseinrichtung zur Berechnung des Kristallisationsgrades aus Parametern der Primärstrahlung sowie aus dem Ausgabesignal des Strahlungsempfängers.

Mit der Erfindung ist es ferner auch möglich, einen Kristallisationsprozess zu steuern. Es wird daher ein Verfahren zur Steuerung eines Kristallisationsprozesses eines Mediums beansprucht, bei welchem zunächst eine Messung mit dem wie zuvor beschriebenen Messgerät erfolgt zur Bestimmung des Kristallisationsgrades des Mediums. Nun wird mittels des erhaltenen Kristallisationsgrades der Prozesszustand und/oder die Prozessveränderung des Kristallisationsprozesses ausgewertet. Beispielsweise kann ausgewertet werden, ob sich der Prozess in der ablaufenden Kristallisation befindet, ob die Kristallisationsrate ansteigt oder gar rückläufig ist, so dass die Kristalle wachsen oder schrumpfen. Auch kann ein Maß für die Kristallgröße ausgegeben werden, und somit bei Überschreiten einer gewünschten Kristallgröße der Kristallisationsprozess beendet werden.

In dem Verfahren zur Steuerung eines Kristallisationsprozesses wird ferner ein Zustandssignal des Kristallisationsprozesses erzeugt. Das Zustandssignal wird hernach bei der Prozessverarbeitung zur Steuerung des Kristallisationsprozesses herangezogen.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: Skizze eines Messgeräts mit Darstellung der Funktionsweise,
- Fig. 2a/2b: Skizze eines Messgeräts zur weiteren Verdeutlichung des Messprinzips,
- Fig. 3: Skizze eines weiteren Messgeräts mit zwei Empfänger,
- Fig. 4: Detailskizze eines Messgeräts mit Darstellung der Funktionsweise,
- Fig. 5: Skizze einer Vorrichtung mit Messgerät,
- Fig. 6: Computermodell eines Messgeräts mit selbstreinigender Spitze,
- Fig. 7/8: Darstellung möglicher Sondenspitzen, die eine Strahlführung bewirken,
- Fig. 9: Vorrichtung mit alternativer Einbauposition des Messgeräts.

### Detaillierte Beschreibung der Erfindung

Fig. 1 zeigt eine prinzipielle Schrägansicht des Sensors 24 mit Sensorspitze 26. Der Sensor umfasst eine Sendefaser 5, die von einer Ummantelung 3 umgeben ist. Die Sendefaser 5 weist an ihrem Ende die Strahlungsquelle 1 auf, welche so benannt ist, da an dieser Stelle die Strahlung bereitgestellt wird, um in das Medium einzutreten. Strahlungsquelle 1 und Strahlungsempfänger 2 sind in Fig. 1 als volle Öffnung und nicht als "pseudo-dreidimensionaler" Schnitt dargestellt. Die Prinzipskizzen werden hierdurch besonders einfach gehalten.

Aus dem inneren Core-Bereich der Sendefaser 1 strahlt Licht in einem Kegel 7 in die Suspension, Lösung oder Emulsion. Mit anderen Worten ergibt sich aus dem Durchmesser der Sendefaser die Breite der Lichtquelle 1, von welcher kegelförmig das Primärlicht in den Primärlichtkegel 7 gestrahlt wird. Der Primärlichtkegel 7 umfasst dabei in seiner Abmessung auch das Messvolumen 9. Die Kegelöffnung, also der Aperturwinkel, ergibt sich aus dem Brechungsindex der Sendefaser 1 und dem Brechungsindex der Lösungsphase 7. Die Sendefaser 1 ist umgeben von einer Ummantelung 3, die häufig Cladding genannt wird. Es kann sich aber in anderen Ausführungsformen einfach um ein Material beliebigen Aufbaus, aber gegenüber dem Material der Strahlungsquelle 1 unterschiedlichem Brechungsindex handeln.

Die in dieser Ausführungsform benachbart zu der Sendefaser 5 positionierte Empfangsfaser 6 besteht aus dem lichtaktiven Teil Core 2, d.h. den Strahlungsempfänger 2, und der Ummantelung 4. In der hier gezeigten Ausführungsform liegen die beiden Faserenden 1, 2 parallel.

Ebenfalls liegen die beiden Fasern 5 und 6 angrenzend ohne Abstand, was nur dieser Ausführungsform geschuldet ist. Selbst die Darstellung unter Verwendung je einer Glasfaser für Strahlungsquelle 1 und Strahlungsempfänger 2 soll nur als beispielhafte Ausführungsform gesehen werden. Eine vergleichbare prinzipielle Wirkung lässt sich durch Glasstäbe, Glasplatten oder andere Geometrien von optischen Elementen oder andere mindestens teildurchlässige Medien zur Lichtführung erzielen.

In der hier gezeigten Ausführungsform ergibt sich zwischen dem Sendekegel 7 und dem empfangenden Bereich 8 für die Faser 6 ein Überlappender Spitzkegel 9, das Messvolumen. Die Form des Messvolumens 9 bestimmt sich aus der jeweiligen Anwendungsform, in unserem Falle die Schnittmenge zweier kegelförmiger Geometrien. In den Bereichen der Sendefaser 7 außerhalb der Schnittmenge 9 wird das Produkt 10 angeleuchtet, die dort erzeugte Sekundärstrahlung gelangt jedoch nicht in den Strahlungsempfänger 2 und die Empfangsfaser 6. In der Teilmenge des Empfangskegels 8 außerhalb der Schnittmenge 9 (das ist der in Fig. 1 rechts dargestellte Bereich) würde zwar jedes angestrahlte Produkt empfangen. In diesem Beispiel wird jedoch nichts durch Sendefaser 7 angestrahlt. Nur das Produkt 10, welches sich in dem Messvolumen 9, d.h. der Schnittmenge 9, befindet, wird gleichzeitig angestrahlt und das reflektierte, remittierte oder gebrochene Licht von dem Strahlungsempfänger 2 aufgenommen.

Eine Besonderheit des hier erfindungsgemäßen Sensorsystems, insbesondere bei der Anwendung auf hohe Dispersionskonzentrationen, also hohe Konzentrationen des Produktes 10, ist die Miniaturisierung. Für Produkte in der Größenklasse 1 bis 1.000 µm, insbesondere 10 bis 300 µm in einer Konzentration oberhalb 1 %, beispielsweise auch oberhalb 0,1 % gilt, dass die optische Transmission von Lichtstrahlen durch solche Suspensionen, insbesondere, wenn der Brechungsindex der Lösung oder gelösten Phase sich von dem Brechungsindex des dispersen Produktes 10 unterscheidet, sehr gering ist. Licht kann in solch hochkonzentrierten Suspensionen typischerweise nur wenige Millimeter, manchmal auch nur wenige Mikrometer transportiert werden. Deshalb ist in der hier gezeigten Ausführungsform der Abstand zwischen der rechten Kante des Cores 1 der Sendefaser 5 z.B. nur ca. 40 µm von der linken Kante des Cores 2 der Empfangsfaser 6 entfernt. Der Abstand zwischen diesen beiden Kanten beeinflusst die Grenzen der Einsatzmöglichkeit hinsichtlich des hochkonzentrierten dispersen Produktes.

Unter dispersem Produkt soll im Rahmen dieser Darstellung des erfindungsgemäßen Produktes entweder Partikel in Lösungen, Tropfen in Lösungen, oder Fluidtropfen in Gasen gesehen werden. Die Abstände der beiden Kanten der Glasfaser können variieren zwischen wenigen Mikrometern, also z. B. 5 µm und einigen Millimetern, also zum Beispiel bis 2, 5 oder bis 10 Millimetern. Naturgemäß werden Sensorbauformen mit größeren Abständen nicht in hochkonzentrierten Suspensionen, wie z. B. 5 Vol.-%ige Dispersionsphase eines Produktes mit Partikelgrößen um 4 µm eingesetzt werden, da der prinzipielle Lichtweg der Sendefaser zur Empfangsfaser zu groß ist. Nichtsdestoweniger kann die Variation dieses Abstandes, insbesondere in Kombination mehrerer Detektoren oder auch mehrerer Sender, die in getakteter Weise in zeitlicher Abfolge Licht ausstrahlen, Vorteile bringen.

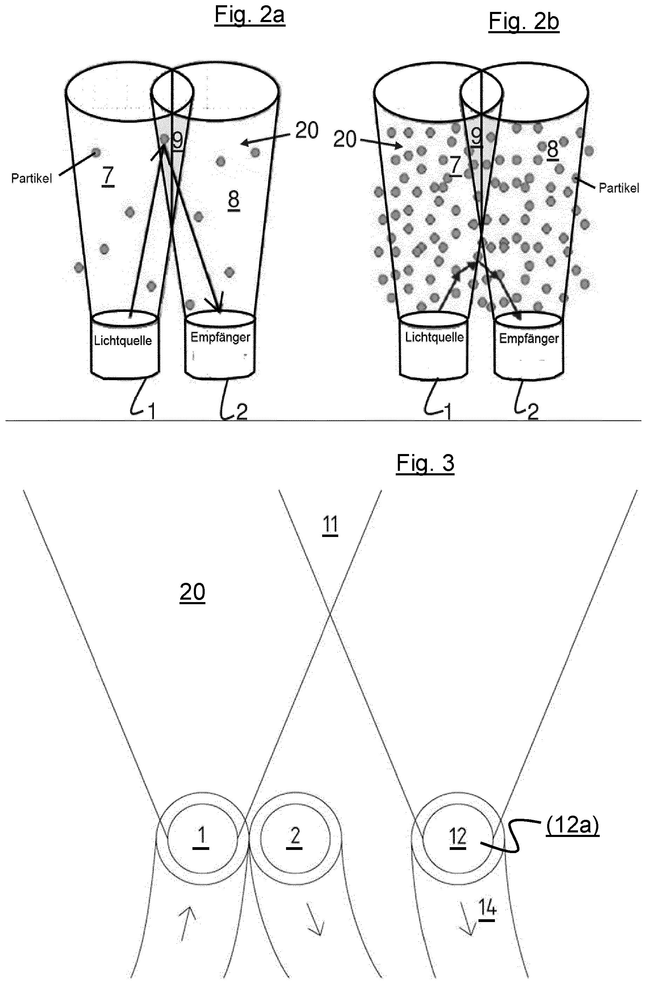

Figs. 2a und 2b verdeutlichen diesen Zusammenhang erneut. Strahlung tritt aus der Strahlungsquelle 1 in das Medium 20 aus und zwar innerhalb des definierten Austrittsbereichs 7, welcher durch verschiedene Parameter definiert wird, wie beispielsweise der Wellenlänge(n) der Primärstrahlung 7, aber auch der lichtformenden Gestaltung der Strahlungsquelle 1 beispielsweise durch Einsatz von Linsen oder dgl. Der Empfänger 2 weist einen Empfangsbereich 8 auf, in welchem er Teilchen 10 empfangen könnte. Aber jedenfalls im Falle von Einfachstreuung kann nur aus dem Messbereich 9, welcher durch den Überlapp des Austrittsbereichs 7 und dem Empfangsbereichs 8 gebildet ist, Sekundärstrahlung in den Empfänger 2 gelangen. In Fig. 2b ist ein Fall von Mehrfachstreuung skizziert, wobei die Primärstrahlung durch Reflektion, Resorption etc. an verschiedenen Partikeln 10 in den Empfänger 2 gelangt, ohne dass das Licht in den Messbereich 9 eingetreten ist. Dieser Fall tritt ebenfalls auf, ist jedoch im Rahmen der Statistik unwahrscheinlicher und verfälscht das Ergebnis nicht bzw. verändert es nur kaum. Bei typischen, am Markt erhältlichen Detektoren wird die Sekundärstrahlung einer Einfachstreuung nicht von der Sekundärstrahlung einer Mehrfachstreuung zu unterscheiden sein, es wird lediglich die empfangene Intensität der Sekundärstrahlung erhöht. Je nach Partikelkonzentration kann dies z.B. rechnerisch berücksichtigt werden.

Fig. 3 zeigt in einer beispielhaften Ausführungsform eine zusätzlich zum Sender 1 mit Core 1 und dem, wie in Fig. 1 dargestellten Empfänger 2 mit Core 2 ein weiterer Empfänger mit Core 12 illustriert. Gezeigt sind hier ebenfalls eine parallele Anordnung von Strahlungsquelle 1 mit Strahlungsempfängern 2 und 12.

Die entsprechende Empfangsfaser 14, gehörend zu Core 12, wird ebenfalls von der Sensorspitze 26 (siehe Fig. 1) weggeleitet. In dieser Ausführungsform ist das erste Messvolumen 9 so aufgebaut wie dies in Fig. 1 skizziert ist. Das zweite Messvolumen 11, d.h. der überlappende Bereich 11 zwischen Sendekegel der Strahlungsquelle 1 und Empfangskegel des zweiten Empfängers 12, weiter von Sender und Empfänger entfernt. Dies führt dazu, dass eine Dämpfung von der Sendestirnfläche 1 bis zum Überlappgebiet dadurch entstehen kann, weil auf dem Weg von 1 nach 11 ebenfalls Produkt vorhanden ist oder sein kann, welches das Licht aus der direkten Verbindungslinie wegstreut oder gar absorbiert. Dasselbe geschieht auf dem Empfangswege von dem Gebiet 11 zur Stirnseite 12. Der Streuvorgang im Gebiet 11 selbst bleibt gleich. Eine Kombination der beiden Sensoren und eine gemeinsame Auswertung der beiden Signale erbringt weitere Informationen.

Während Core-Faser 2 produktangeleuchtet von Core 1 mit hohem Streu- und geringem Absorptionsanteil detektiert, wird Core 12 das von Core 1 angeleuchtete Produkt mit einer anderen Mischung aus Absorption und Streuung aufnehmen. Durch einfache Quotientenbildung der beiden Signale nach vorheriger Reinigung bzw. Kalibration der Sensorsignale kann hier beispielhaft eine Auswertung erzeugt werden, die fast ausschließlich die Wirkung der Dämpfung zeigt, die durch die Transmission der betrachteten Strecke von 1 nach 11 und zurück von 11 nach 12 verursacht wird. In ähnlicher Weise lässt sich die Streuwirkung mit herausgerechneter Absorptionswirkung der Transmissionsstrecke bestimmen. Durch die Kombination von zwei oder mehr Sensoren ist es also möglich, unterschiedliche Streuwirkungen von partikulären Produkten 10 oder jeglicher Art der Dispersphase zu bestimmen. Eine mögliche Anwendungsform ist die Bestimmung der Eigenschaften der Oberfläche der Partikel.

Ein zu Fig. 3 alternativer Aufbau ergibt sich, wenn anstelle des zweiten Sensors 12 eine zweite Strahlungsquelle 12a beabstandet von der Strahlungsquelle 1 angeordnet wird. Die schematische Darstellung der Fig. 3 ermöglicht es, dass beide alternativen Varianten mit derselben Figur illustriert werden können. Im Falle der gezeigten Verwendung von Fasern würde sich technisch gesehen sogar kaum etwas ändern, denn wenn das Bauteil 12/12a als Strahlungsquelle 12a betrieben werden soll, ist lediglich der Sensor 13 so herzurichten, dass die Faser 14 (dann: Sendefaser 14) mit einem Lichterzeuger 17 verbunden wird anstelle eines Messgerätes.

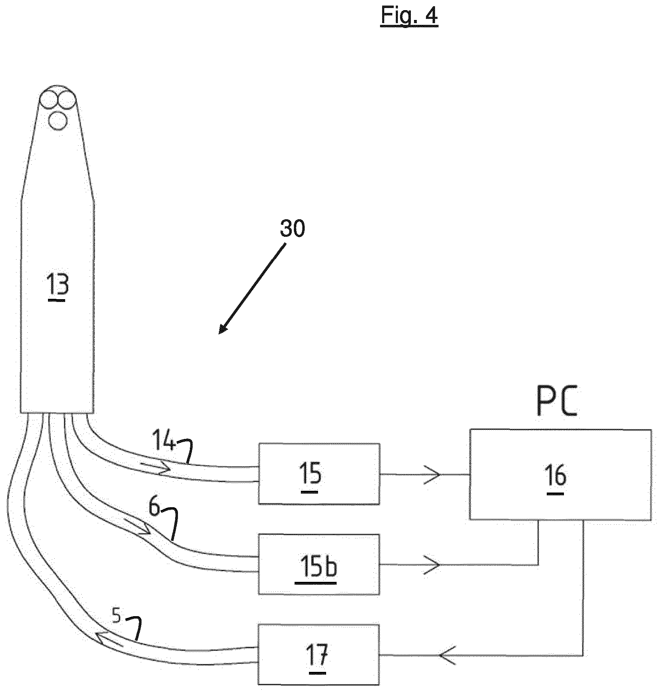

Die in Figs. 1 bis 3 deutlich vergrößert dargestellte Sensorspitze ist in Fig. 4 als Gesamtgerät 30 demonstriert. Die verschiedenen Fasern 5, 6, 14 als eine mögliche Ausführungsform können in einer Sensorspitze 13 münden. Die Bauform der Sensorspitze 13 wird nur als skizzierte Ausführungsform im Rahmen der hiesigen Erfindung angesehen. Eine potenzielle Ausführungsform liegt in einer spitzen Anordnung, die beim Eintauchen in die eventuell vorhandene Strömung des Mediums 20 diese nur wenig stört. Die Sendefaser 5 wird in der hier gezeigten Ausführungsform von einem Strahlungserzeuger 17 versorgt. Die für die Strahlungsquelle 1 bereitgestellte Strahlung wird gemäß üblichen spektroskopischen Auslegungsgesetzen gewählt. Der Strahlungserzeuger 17 kann lichtemittierende Dioden (LEDs) umfassen, oder aber eine Laserlichtquelle, eine Weißlichtquelle auf Basis z. B. einer Halogen- oder Kurzbogenbeleuchtung; Es können auch gepulste Lichtquellen, wie Kurzbogenlampen, gepulste LEDs oder andere eingesetzt werden. Je nach Anwendungsfall können auch Infrarot-, Nahinfrarot-, UV- oder andere Strahlungserzeuger verwendet werden. Die Taktung und Wellenlänge der hier eingesetzten Strahlungserzeuger können für Ausführungsformen der Erfindung eingestellt werden. Hierbei hat es sich ebenfalls als Vorteil herausgestellt, wenn der Strahlungserzeuger 17 beabstandet von der Lichtquelle 1 angeordnet ist, da dann der Strahlungserzeuger 17 umgeschaltet oder ausgetauscht werden kann, um beispielsweise Messbereiche zu verändern, selbst während des Betriebs der Messsonde 13.

Eine solche Ausführungsform kann darin gesehen werden, dass beispielsweise Licht in einem schwach oder auch stark absorbierenden Wellenlängenbereich bezüglich der Lösungsphase eingesetzt wird. Wird z. B. eine wässrige Suspension eingesetzt, so können Wellenlängen im Bereich von 1.100 bis 1.300 nm oder auch 1.200 bis 1.300 nm oder auch aus anderen Bereichen sinnvoll sein, da hier Wasser eine Absorption aufweist, aber eben Licht in geringem Maße durchlässt.

Die Reichweite des Sensorsignals kann somit limitiert werden, was in einigen Fällen von Vorteil ist. Andere, in der Lichtausbreitung verminderte Wellenlängen liegen im Bereich von 1.400 bis 1.500 nm oder auch bis 1.600 nm vor. Hier ist die Absorption stärker, was bedeutet, dass das Licht noch kürzer in die Suspension eintaucht. Ähnlich können Wellenlängen im Bereich 800 bis 900 nm eingesetzt werden; Hier ist allerdings die Lichtschwächung im Falle von Wasser oder wässriger Lösung geringer, was ggf. im Falle von geringen Suspensionskonzentrationen eingesetzt werden kann. Die Grundidee, unabhängig von der eingesetzten Wellenlänge, die auch ebenfalls im Mittelinfrarot oder im UV unterhalb von 200 nm zur Anwendung kommen kann, liegt darin, das Eindringvermögen des Lichtes in die Lösung zu begrenzen. Dadurch machen näherliegende Partikel einen höheren Lichtanteil in dem Gesamtsignal aus.

In Fig. 4 verbindet die Faser 6 die Sensorspitze 13 mit einem Detektor 15 b. Die Faser 14 verbindet die Sensorspitze 13 mit einem anderen, ähnlichen oder gleichen Detektor 15. Die empfangbare Wellenlänge, Empfindlichkeit, Nachweisgeschwindigkeit und dgl. der Detektoren kann mittlerweile von aus am Markt erhältlichen Geräten ausgewählt werden. Es können hier Photometer zum Einsatz kommen, Einzelphotonenzähler, Spektrometer oder andere Detektorsysteme.

Das Ergebnis oder die Ergebnisse werden von dem Detektor üblicherweise über Leitungen elektrisch an ein Auswertesystem 16, also z. B. einen PC, eine speicherprogrammierbare Steuerung (SPS), ein Prozessleitsystem oder einen Mikrocontroller weitergegeben. Die Weitergabe kann auch kabellos, d.h. über Funk geschehen.

Die Auswertungseinheit 16 verrechnet die als Zeitreihe ankommenden Signale von den Detektoren 15, 15b in unterschiedlicher Weise. Es können einzelne Signale einfach als Signalhöhe ausgewertet werden.

Ein Kerngedanke der vorliegenden Offenbarung und eine Erkenntnis liegt darin, dass die von dem Sensor bereitgestellten Signale proportional, oder sogar direkt proportional, zur Oberfläche der Dispersphase sind. Dies ist typischerweise solange gültig, solange der absorbierende Anteil der Dispersion nicht zu stark ist. Wenn der absorbierende Anteil stärker wird, wird von dem erfindungsgemäßen Sensoraufbau jedenfalls kein direkt proportionales Signal mehr bereitgestellt, sondern eine andere Kennlinie, die jedoch dem Wesen der Erfindung keinen Abbruch tut. Neben dem Auswerten von im einfachsten Fall Mittelwerten der Signale können auch unterschiedliche Verrechnungen der Signale der Detektoren 15 und 15 b stattfinden. Im einfachsten Falle ist dies eine Quotientenbildung. Es können auch Zeitreihenanalysen der Signale stattfinden, wie z. B. das Errechnen von Ausreißern, die Anwendung von Mittelwert, von Median, von Boxplotfiltern und anderen.

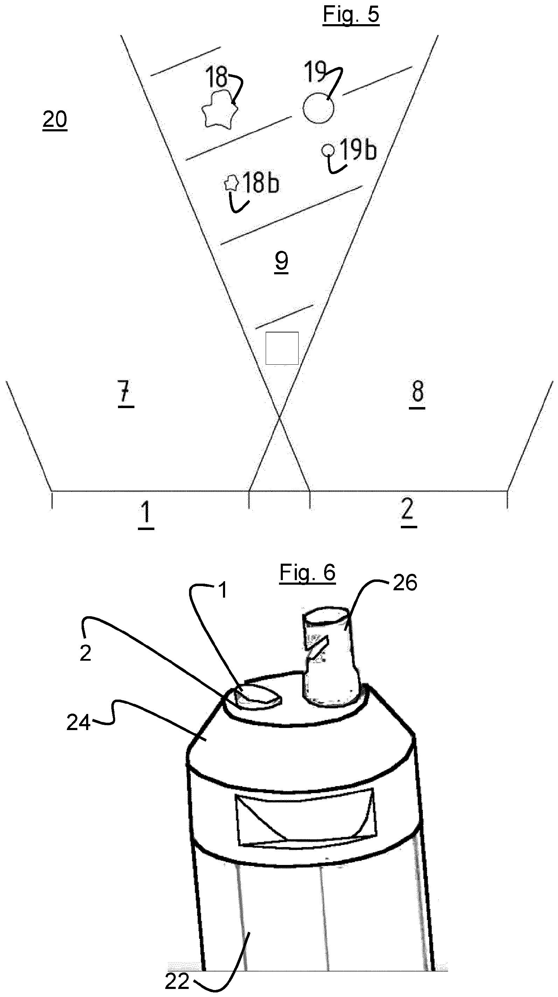

In Fig. 5 ist illustriert, dass Produkte 10, also Kristalle, die im Medium 20 sind, unterschiedliche Oberflächen haben können. Das Produkt 18 als großes Partikel oder 18 b als kleineres Partikel sind in der Illustration auf andere Weise und mit anderem Habitus entstanden als die Partikel 19 als großes Partikel oder 19 b als kleineres Partikel. Alle Partikel befinden sich in dem Messvolumen 9, welcher sowohl von dem Sendekegel 7 als auch dem Empfangskegel 8 geschnitten wird und somit in dieser Ausführung mittig angeordnet ist. Die Strahlungsleistung aus dem Sendekegel 7 kommt aus der Sendefaser 1 und das in dem Messvolumen 9 gestreute Licht gelangt jedenfalls teilweise in die Empfangsfaser 2.

Typischerweise wurde gefunden, dass Produkte 10, die bei Kristallisationsprozessen im Wachsen begriffen sind, mehr Ähnlichkeit mit dem Produkttyp 18 bzw. 18 b aufweisen und Produkte, die aus abschmelzenden oder sich auflösenden Partikeln vermessen werden, stärker dem Produkt 19 bzw. 19 b ähneln. Eine grundlegende Erklärung ist produktabhängig, im Folgenden soll dies beispielhaft ausgeführt werden:
Wachsende Partikel 10 bilden sich beispielsweise dadurch, dass aus der Lösungsphase sich Moleküle auf die Oberfläche legen. Dies geschieht in unregelmäßiger Weise, was typischerweise zu stärkerer Zerklüftung der Oberfläche führt. Partikel von diesem Habitus streuen Licht oft intensiver bei gleicher Querschnittsfläche. Wird das gleiche Produkt sich in einem auflösenden Prozess befinden und dem Partikel 19 oder 19 b stärker ähneln, so lösen sich Partikel von der Oberfläche, verbleiben in der Regel kurze Zeit in der Nähe der Oberfläche und bewirken dadurch ein Brechungsindex-Matching, was letztendlich zu einer Lichtbrechung hin zur Oberfläche führt. Dadurch sehen die Partikel glatter aus. Die Streuung ist bei gleicher Oberfläche unterschiedlich.

Im Rahmen der vorliegenden Offenbarung konnte bestimmt werden, dass typischerweise die Kombination von Detektoren mit miniaturisierten Glasfasern sich vorteilhaft auf die habitusunabhängige Bestimmung der Oberfläche auswirkt. Es lässt sich aus beiden Signalen entweder durch Kalibration oder durch eine für den Fachmann leicht erkennbare geeignete Mathematik eine habitusunabhängige Oberfläche bestimmen. In anderen Anwendungsfällen kann es vorkommen, dass diese Zusatzinformation nicht benötigt wird, weil aus anderen Informationsquellen bzw. Sensoren bekannt ist, ob der Prozess sich in Auflösung befindet oder die Partikel sich eher im wachsenden Zustand befinden. Bei üblichen Kristallisationsverfahren will man allerdings aus der Lösungsphase Kristalle ausfällen bzw. auskristallisieren. Dadurch werden die Prozesse typischerweise so im Rahmen der Prozessparameter gesteuert, dass die Partikel 10 sich möglichst stets in der Wachstumsphase und mit dem Habitus 18 oder 18 b befinden.

Fig. 6 zeigt eine Ausführungsform eines Sondenkopfes 24 mit einer automatischen Reinigungseinheit 26. Die Reinigungseinheit 26 ist hergerichtet, den Sondenkopf 24 von Verkrustungen zu befreien, wie sie in einer übersättigten Lösung auftreten, da Partikel 10 auch an der Sonde 22 anhaften. Die Reinigungseinheit 26 fährt aus einer Öffnung aus dem Sondenkopf 24 heraus und spült den Sondenkopf 24 mit einem Reinigungsmedium, beispielsweise warmes Wasser. Das Freihalten der Optik kann z.B. auch über getaktete Spülung funktionieren. Dabei kann die Sondenspitze hohen Temperaturen im Medium ausgesetzt sein, wohingegen die Elektronik über Glasfasern angekoppelt und ggf. gekühlt ist.

Andere Strategien zur Reinigung des Sondenkopfes 24 verwenden die lokale Erwärmung des Sensors durch z.B. elektrische integrierte Heizpatronen und damit die Verhinderung von Auskristallisation am Sensor. Mit anderen Worten wird durch eine Temperaturerhöhung des Sondenkopfes 24 hin zu einer höheren Temperatur als die Temperatur des Mediums ein Ausfallen von Partikeln 10 am Sondenkopf 24 verringert oder unterbunden. Die Hydrophobierung von funktionalen Oberflächen, wie den optischen Oberflächen, stellt eine weitere Möglichkeit dar.

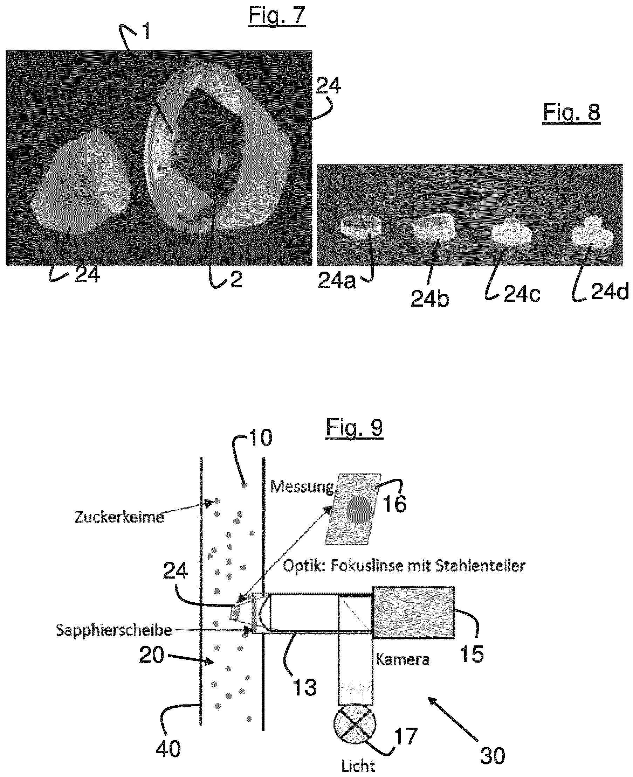

Aus Gründen der Prozesshärtung und der Kratzfestigkeit ist es vorteilhaft, für die Sensoren sehr edle Materialien wie zum Beispiel Saphir einzusetzen. Fig. 7 und Fig. 8 zeigt beispielhaft potentielle Formen eines integrierten Sondenkopfes 24, 24a, 24b, 24c, 24d, der insbesondere aus einem einstückigen Saphir bereitgestellt wird. Die unterschiedlichen optischen Eigenschaften der Formen stellen dabei auch unterschiedliche Formen des Strahlungsbereichs 7 bzw. des Empfangsbereichs 8 bereit.

Fig. 9 zeigt eine weitere alternative Einbausituation für die Vorrichtung 30 bzw. das Messgerät 13. Das Medium 20 wird in einer Röhre 40 bereitgestellt, beispielsweise strömt es dort mit einer Strömungsgeschwindigkeit v hindurch. Die Vorrichtung 30 ist lateral an die Röhre 40 angesetzt, so dass die Sondenspitze 24 im optischen Kontakt in oder an die Röhre 40 ragt. Die bereitgestellte Primärstrahlung 7 wird so eingestellt, dass der Empfänger 2 kein oder nur unbedeutend wenig Sekundärstrahlung empfängt, die von der Innenwand der Röhre 40 ggf. reflektiert würde. Beispielsweise wird die Reichweite der Primärstrahlung 7 so eingestellt, dass die gegenüberliegende Röhreninnenwand gar nicht erreicht wird. Somit kann eine Messung erfolgen, die lediglich in der Fluidströmung stattfindet und damit quasi-kontinuierlich wie in einem größeren Behältnis.

Zusammenfassend wurde eine Sonde bzw. eine Vorrichtung vorgestellt, mittels welcher besonders einfach eine Korrelation zwischen Rückstreuung und disperser Oberfläche in einem Medium 20 erhalten werden kann. Primär soll dabei die disperse Oberfläche (m2/m3) über Rückstreuung beispielsweise mit einem Glasfasersensorsystem 30 erfasst werden. Hierzu wurde eine besondere Sensorgeometrie entwickelt, die ähnlich wie ein Punktstrahler wirkt und eine abstandsgewichtete Information auszuwerten vermag. Die Auswertung kann so eingestellt werden, bzw. dies kann durch die Formung der Primärstrahlung 7 erreicht werden, dass Partikel 10, die von der Sondenspitze 24 im Moment der Messung weiter entfernt sind, geringer gewichtet werden. Damit generiert man eine Art Streuvolumen 9 mit weichen Rändern. Durch den Abstand zwischen Sender und Empfänger und durch die Abstrahlgeometrie des Senders kann dieses Pseudovolumen und der Randübergang gestaltet werden. Weiterhin ist es vorteilhaft für die Qualität des Ergebnisses, wenn die Streueigenschaft der Partikel 10 über einen Sekundärkanal getrennt als Korrekturgröße bestimmt wird, also beispielsweise mittels eines zweiten Empfängers 12.

Die Oberfläche der Dispers-Phase (Oberfläche aller Partikel pro Volumenelement des Kristallers) ist eine der entscheidenden Größen für die Steuerung eines Kristallisationsprozesses. Durch eine molekülselektive weitere Messung (z.B. mehrkanalige Raman-Photometrie), die im selben Sensorkopf integriert werden kann, kann in Kombination mit Messgrößen wie dem Brechungsindex die Konzentration der Lösungsphase bestimmt werden und hieraus der aktuelle Kristallisationsgrad und die Übersättigung errechnet werden. Aus den beiden Größen disperse Oberfläche und Lösungskonzentration kann der aktuelle Sauterdurchmesser bestimmt werden. Aus der kinetischen Verfolgung der Messgrößen werden die Wachstumsprozesse abgeleitet. Diese Prozessgrößen sind bisher nicht vollständig messbar. Mittels der Bereitstellung dieser Daten kann beispielsweise ein optimaler Kristallisationspunkt gehalten werden, bei dem eine maximale Raum-Zeit-Ausbeute bei garantiert verhinderter spontaner Keimbildung kombiniert wird.

Es ist geplant, das Sensorsystem zunächst als Eintauchsensor bereitzustellen, z.B. mittels Flansch-Montage ausgeführt. Die Sensormaße ergeben sich aus den gewünschten Randbedingungen. Hierbei können beispielsweise in der Praxis handhabbare Durchmesser zwischen 6 mm und 51 mm (2 Zoll) realisiert werden. Die Maximallängen der Sensorköpfe 24 ergeben sich aus üblichen Stabilitätsüberlegungen angeströmter Rohre.

Im Bereich des Zuckers sollen unterschiedliche Teilprodukte überwachbar sein, die Prozesshärtung wird in Produktionsanlagen für Zuckerherstellung trainiert. Nichts destotrotz kann der Sensor auch für andere Kristallisationsvorgänge eingesetzt werden, wie zum Beispiel bei der Kristallisation von Ammonsulfat, Adipinsäure, Salze bis hin zu Fällungsprodukten im Bereich von Farbpigmenten und anderem. Das Sensorsystem soll auch den widrigen Umständen unterschiedlicher Kristallisationsprozesse Rechnung tragen können. Dieses sind Temperaturen bis 180° Celsius, Drücke bis 30 bar, abrasive Oberflächen und Partikel, korrosive Lösungsmittel und Säuren und Laugen. Insbesondere wurden im Rahmen der Offenbarung auch Sensorhärtungsvorgänge oder Sensorhärtungsvorrichtungen vorgestellt, die solche Sensoren in einer rauen Produktionsumgebung überleben lassen. Solche Umgebungen sind gezeichnet durch Vibration, Staub, Schmutz, Anhaftung von Produkt 10 an der Sondenspitze 24, aggressive Dämpfe, brutale Arbeiter, Interaktionen im laufenden Betrieb von Anlagen.

Die Messgrößen, die es zu überwachen gilt, sind durch den Prozess bestimmt. Hierbei spielt die disperse Oberfläche eine entscheidende Rolle. Diese ist verantwortlich für den Abbau der Übersättigung. Die in der Lösung befindlichen Wertprodukte werden durch Kontakt mit dispersen Oberflächen an diese angelagert. Bisherige Sensoren reagieren auf Partikelkonzentration oder messen im Laborbereich Partikelgrößen. Eine entscheidende angebotene Messgröße ist jedoch die Menge an Kristalloberfläche, die pro Volumenelement angeboten wird. Der Kristallisationsvorgang im Sinne der Umwandlung von fluidem Zucker in Feststoffzucker skaliert jedoch mit der Übersättigung multipliziert mit der dispersen Kristalloberfläche. Der hier vorgestellte Sensor misst diese Prozessgröße aus den oberflächengesteuerten Streulichtintensitäten heraus.

Eine weitere wichtige Prozessgröße ist der volumetrische Kristallgehalt. Dieser ist für optische Messungen sehr hoch. Daher wurden bereits Untersuchungen durchgeführt, die ausloten, ob solch hohe Konzentrationen messbar sind. Es wurden Versuche mit Calzilit 4, einem Kalziumkarbonat mit einer mittleren Partikelgröße von 4 µm, durchgeführt. Der mögliche Konzentrationsbereich, der mit optischen Sensoren vermessen werden kann, skaliert linear mit der Partikelgröße, sodass bei höheren Partikelgrößen - wie sie im Zuckerbereich vorliegen - höhere Konzentrationen messbar sind.

Ebenfalls eine wichtige Größe ist der Partikeldurchmesser, wobei in Prozessumgebung die Partikelgrößen-Verteilung auf wenige prozessrelevante Größen reduziert ist. Die relevanten Größen ergeben sich als mittlerer Oberflächen-äquivalent-Durchmesser, genannt SauterDurchmesser, Verteilungsbreite, Bi-Modalität oder Mono-Modalität, ggf. getrennt ausgewiesen als Grobkorn und Feinkorn.

Die Vorrichtung 30 kann als "Multisensor" ausgeführt werden, und kann mehrere Messprinzipien in einem Sondenkopf 24 vereinen. Ein Messprinzip wird mit einer hohen Ortsauflösung realisiert, was in diesem Anwendungsfall ca. 30 Mikrometer entsprechen. Dadurch werden vorbeifließende Partikel ein fluktuierendes Signal erzeugen. Dies wird mit hoher Messfrequenz (z.B. 1000 Hz) aufgenommen und analysiert. Aus dem Ergebnis wird ein Maß für die Partikelgröße berechnet. Vereinfacht ausgedrückt, zeigt sich ein Anwachsen der Partikel in stärkeren zeitlich aufeinanderfolgenden Ausschlägen des mit hoher Datenrate (ggf. 2000 Hz) aufgenommenen Messsignales.

Gerade im Bereich großer Kristalle, wie im Beispiel Zuckerkristallisation können ausführliche Untersuchungen im Bereich der hochfrequenten Abtastung erfolgen. Hierdurch können zusätzliche Informationen über die Partikelgröße erhalten werden. Mit einer Ortsauflösung von angestrebten 20 µm zeigen vorbeischwimmende Partikel mit ggf. > 100 µm bereits eine Substruktur (Lichtpuls durch vorbeiziehenden Kristall). Im Maximum des Pulses ist die tatsächliche Pulshöhe unabhängig von der Größe, sondern nur abhängig vom Rückstreuvermögen des Partikelmaterials. Damit hat man ein Maß für die Oberflächenrauigkeit, die eine Korrelation zur Übersättigung aufweist. Wachsende Partikel sind rauer als schmelzende Parti- kel und erscheinen damit in der Rückstreuung heller bei gleicher Größe. Dieses Phänomen ist bisher nicht literaturbeschrieben. Es wird erwartet, dass das so erhaltene Maß für die Oberflächenrauigkeit der Partikel 10 als Steuergröße für die Steuerung des Kristallisationsprozesses direkt eingesetzt werden kann.

Das erfindungsgemäße Messsystem kann beispielsweise so gestaltet werden, dass es auch die folgenden Anforderungen ggf. zusätzlich erfüllt:
- In-line-Messung, ohne Probenahme, Verdünnung oder Beeinflussung der Produktion
- Permanentes Monitoring der Produktgrößen
- Messung bei sehr hohen Partikelkonzentrationen bis über 50
- Integrierte Reinigungs- oder Freihaltestrategien gegen Beläge
- Hohe Druck- und Temperaturbelastbarkeit (180°C), um neben Zucker auch andere Kristallisationen überwachen zu können
- Relevante Aussagen über Kristallisationsprozesse in der chemischen, pharmazeutischen und Lebensmittelindustrie
- Belastbare Aussagen über Kristallgröße, Wachstum, spezifische Oberfläche der Dispers- Phase
- Zusammensetzung und Konzentration der Lösungsphase

Für dispers-phasige, verfahrenstechnische Prozesse spielt dabei insgesamt die spezifische Oberfläche der dispersen Phase in Suspensionen, Emulsionen, Blasensäulen und Aerosolen eine entscheidende Rolle für die Geschwindigkeit des Prozessfortschrittes. Je größer die angebotene Oberfläche ist, desto schneller kann z.B. eine grenzflächenbestimmte Reaktion ablaufen. Dies wirkt sich direkt auf die Raum-Zeit-Ausbeute in großtechnischen chemisch/verfahrenstechnischen Produktionsanlagen aus.

Speziell für den Vorgang der Kristallisation und dem hier beobachtbaren Kristallwachstum oder auch der Kristallauflösung ist neben der Über- oder Untersättigung die angebotene Kristalloberfläche wachstumslimitierend. In der Literatur wird das Vermessen der Kristalloberfläche häufig über die Bestimmung der Partikelgrößenverteilung und der Volumen- oder Massenkonzentration bestimmt. Dieses Verfahren ist jedoch aufwändig, sodass es selten zu kontinuierlich messenden, permanent installierten Messgeräten kommt.

Das vorliegend ausführlich vorgestellte System stellt einen einfach einzubauenden optischen Rückstreusensor vor, der als direktes Maß unter bestimmten Randbedingungen den Kristallisationsgrad ausgibt. Dies geschieht auch in konzentrierten Suspensionen und Emulsionen, wo übliche Nephelometrie bereits versagt. Die mathematische Kombination unterschiedlicher Einzelsignale ermöglicht darüber hinaus teilweise die Unterdrückung von Matrixeffekten (störende Quereinflüsse). Der Sensor ist auch in Batch- und Konti-kristallern in-line auch in rauher Produktionsumgebung auch in explosionsgefährdeten Zonen einsetzbar. Die Auswahl bestimmter Wellenlängen und Signalauswertungstechnologien kann, wie dargelegt, die Aussagefähigkeit der enthaltenen Signale verbessern.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen.

In allen Figuren stellen gleiche Bezugszeichen gleiche Gegenstände dar, so dass Beschreibungen von Gegenständen, die ggf. nur in einer oder jedenfalls nicht hinsichtlich aller Figuren erwähnt sind, auch auf diese Figuren übertragen werden können, hinsichtlich welchen der Gegenstand in der Beschreibung nicht explizit beschrieben ist.

### Bezugszeichenliste:

- 1: Strahlungsquelle
- 2: Strahlungsempfänger
- 3: Ummantelung der Strahlungsquelle bzw. der Sendefaser
- 4: Ummantelung des Strahlungsempfängers bzw. der Empfangsfaser
- 5: Sendefaser
- 6: Empfangsfaser
- 7: Strahlungsbereich der Primärstrahlung
- 8: Empfangsbereich des Strahlungsempfängers
- 9: Messvolumen
- 10: Partikel, beispielsweise im Messvolumen
- 11: zweites Messvolumen
- 12: zweiter Strahlungsempfänger
- 12a: zweite Strahlungsquelle
- 13: Messspitze bzw. Messgerät
- 14: zweite Empfangsfaser bzw. zweite Sendefaser
- 15: erster Detektor
- 15b: zweiter Detektor
- 16: Auswertungseinrichtung
- 17: Strahlungserzeuger
- 18, 18b: Partikel
- 19, 19b: Partikel
- 20: Medium
- 22: Sondengehäuse
- 24: Sondenspitze
- 26: Reinigungseinheit
- 30: Vorrichtung mit Messgerät
- 40: Röhre

## Patentansprüche

1. Vorrichtung (30) zur Ausgabe des aktuellen Kristallisationsgrades eines Mediums (20), umfassend:
- ein Messgerät (13) für die Erfassung des Kristallisationsgrades des Mediums (20), das Messgerät umfassend:
o eine Lichtquelle (1) mit einem Abstrahlbereich zum Auslassen einer Primärstrahlung (7) in das Medium, wobei die Primärstrahlung in einer Primärstrahlrichtung ausgesendet wird und aus der Lichtquelle austritt, wobei die Lichtquelle hergerichtet ist, die Primärstrahlung so in das Medium einzustrahlen, dass ein räumlich begrenztes Messvolumen (9, 11) zur Erzeugung von Sekundärstrahlung (8) in dem Messvolumen bereitgestellt wird,
∘ einen Lichtsensor (2) mit einem Erfassungsbereich (8) zur Aufnahme zumindest eines Teils der in dem Messvolumen erzeugten Sekundärstrahlung, wobei der Lichtsensor (2) außerhalb der Primärstrahlrichtung angeordnet ist und hergerichtet ist, die Sekundärstrahlung aufzunehmen und ein Ausgabesignal auszugeben,
wobei die optische Austrittsachse der Lichtquelle (1) im Wesentlichen parallel zu der optischen Eintrittsachse des Lichtsensors (2) liegt; und wobei die Primärstrahlung (7) kegelförmig als Primärstrahlkegel bereitgestellt wird, das Messgerät ferner umfassend:
∘ einen weiteren Lichtsensor (12), welcher beabstandet von der Lichtquelle (1) und/oder dem Lichtsensor (2) angeordnet ist, und/oder eine weitere Lichtquelle (12a) beabstandet von der Lichtquelle (1), wobei zumindest ein zweites Messvolumen bereitgestellt wird, durch die Primärstrahlung und eine entsprechende zusätzliche dem weiteren Lichtsensor zugeordnete Sekundärstrahlung und/oder durch eine der weiteren Lichtquelle zugeordnete zusätzliche Primärstrahlung und eine dem Lichtsensor zugeordnete zusätzliche Sekundärstrahlung, wobei das zweite Messvolumen (11) von der Lichtquelle bzw. vom Lichtsensor weiter entfernt ist als das Messvolumen, die Vorrichtung ferner umfassend:
- eine Auswertungseinrichtung (16) zur Berechnung des Kristallisationsgrades aus Parametern der Primärstrahlung sowie aus den entsprechend der mit den Lichtsensoren (2, 12) gemessenen Sekundärstrahlungen (8), ausgegeben Signalen und/oder aus den Parametern der Primärstrahlungen sowie aus dem entsprechend der mit dem Lichtsensor (2) gemessenen Sekundärstrahlung (8) ausgegeben Signal, wobei zumindest ein zweites Messvolumen bereitgestellt wird, entweder durch die Primärstrahlung und eine entsprechende zusätzliche dem weiteren Lichtsensor zugeordnete Sekundärstrahlung oder durch eine der weiteren Lichtquelle zugeordnete zusätzliche Primärstrahlung und eine dem Lichtsensor zugeordnete zusätzliche Sekundärstrahlung,
wobei, die Lichtquelle einen Strahlungserzeuger zur Bereitstellung der Primärstrahlung umfasst.

2. Vorrichtung (30) nach Anspruch 1, wobei das Messvolumen (9, 11) durch das Schnittvolumen zwischen dem Abstrahlbereich (7) der Lichtquelle (1) und dem Erfassungsbereich (8) des Lichtsensors (2) definiert ist.

3. Vorrichtung (30) nach einem der vorstehenden Ansprüche, wobei der Lichtsensor (2) einen kegelförmigen Empfangsbereich aufweist.

4. Vorrichtung (30) nach einem der vorstehenden Ansprüche, wobei die Lichtquelle (1) und/oder der Lichtsensor (2) mit einer Strahlenoptik ausgerüstet ist.

5. Vorrichtung (30) nach einem der vorstehenden Ansprüche, wobei der Lichtsensor (2) dazu hergerichtet ist, die oder einen Teil der Rückstreuung der Primärstrahlung (7) aus dem Messvolumen (9, 11) zu erfassen, wobei die Rückstreuung aus dem Messvolumen reflektierte, remittierte oder gebrochene Strahlung umfasst.

6. Vorrichtung (30) nach einem der vorstehenden Ansprüche, wobei der Lichtsensor (2) benachbart zu der Lichtquelle (1) angeordnet ist.

7. Vorrichtung (30) nach einem der vorstehenden Ansprüche, wobei die Lichtquelle (1) mittels faseroptischer Verbindungsleitung (5), mit einem Strahlungserzeuger (17) verbunden ist, welcher die Primärstrahlung erzeugt und an der Lichtquelle bereitstellt, und/oder
hergerichtet ist, inkohärentes Licht zu emittieren.

8. Vorrichtung (30) nach einem der vorstehenden Ansprüche, wobei die Lichtquelle (1) gemeinsam mit dem Lichtsensor (2) in einem gemeinsamen Sondengehäuse (22) angeordnet und beherbergt ist, wobei das Sondengehäuse eine flach zulaufende und/oder strömungsgünstige Gehäusespitze (24) aufweist.

9. Vorrichtung (30) nach einem der vorstehenden Ansprüche, wobei
- die Lichtquelle (1) eine Sendefaser (5), einen Glasstab oder eine Glasplatte umfasst, und/oder
- der Lichtsensor (2) eine Empfangsfaser (6), einen Glasstab oder eine Glasplatte umfasst.

10. Vorrichtung (30) nach einem der vorstehenden Ansprüche, wobei die Lichtquelle (1) und der Lichtsensor (2) von einer Ummantelung (3, 4) umgeben sind, wobei die Ummantelung (3) der Lichtquelle an die Ummantelung (4) des Lichtsensors benachbart anliegt.

11. Vorrichtung (30) nach einem der vorstehenden Ansprüche, wobei der Abstand zwischen Lichtquelle (1) und Lichtsensor (2) 0,5 mm oder weniger, bevorzugt 100 µm oder weniger, weiter bevorzugt 50 µm oder weniger beträgt.

12. Vorrichtung (30) nach einem der vorstehenden Ansprüche, das Messgerät (30) ferner umfassend
- eine Reinigungseinrichtung (26) zur Reinigung der Lichtquelle (1) und/oder des Lichtsensors (2).

13. Vorrichtung (30) nach einem der vorstehenden Ansprüche, wobei das Messvolumen (9, 11) dadurch räumlich begrenzt wird, dass die maximale Eindringtiefe der Primärstrahlung ausgewählt und/oder an das Medium angepasst wird, durch Auswahl der Wellenlänge der eingesetzten Primärstrahlung, wobei die Wellenlänge der Primärstrahlung bevorzugt im Bereich von 800 bis 1.600 nm liegt, besonders bevorzugt im Bereich von 1.100 bis 1.300 nm.

14. Verfahren zur Steuerung eines Kristallisationsprozesses eines Mediums (20), mit den Schritten:
- Bereitstellen eines Mediums (20) umfassend ein fluides Dispersionsmedium und mindestens eine disperse Phase,
- Inline-Messung mit der Vorrichtung (30) nach einem der Ansprüche 1 bis 13, umfassend
- Aussenden einer Primärstrahlung in einer Primärstrahlrichtung aus der Lichtquelle (1) in die Dispersion unter Ausbildung eines kegelförmigen Abstrahlbereiches (7),
- Einfallen der Primärstrahlung in die Dispersion unter Ausbildung eines räumlich begrenzten Messvolumens (9, 11),
- Erzeugen einer Sekundärstrahlung (8) im Messvolumen (9, 11),
- Aufnehmen zumindest eines Teils der im Messvolumen erzeugten Sekundärstrahlung durch den außerhalb der Primärstrahlrichtung angeordneten Lichtsensor (2) in einem Erfassungsbereich (8),
- Weiterleiten der Sekundärstrahlung,
- Erzeugung einer Messreihe entsprechend dem Kristallisationsgrad des Mediums,
- Auswerten des Prozesszustandes und/oder der Prozessveränderung des Kristallisationsprozesses mittels der erhaltenen Messreihe,
- Erzeugen eines Zustandssignals des Kristallisationsprozesses,
- Heranziehen des Zustandssignals bei der Prozessverarbeitung zur Steuerung des Kristallisationsprozesses.

## Claims

1. Apparatus (30) for outputting the current degree of crystallisation of a medium (20), comprising:
- a measuring device (13) for detecting the degree of crystallisation of the medium (20), the measuring device comprising:
- a light source (1) having a radiation region for emitting a primary radiation (7) into the medium, wherein the primary radiation is emitted in a primary beam direction and emerges from the light source, wherein the light source is configured to radiate the primary radiation into the medium in such a way that a spatially limited measuring volume (9, 11) for generating secondary radiation (8) in the measuring volume is provided,
- a light sensor (2) having a detection region (8) for receiving at least some of the secondary radiation generated in the measuring volume, wherein the light sensor (2) is arranged outside the primary beam direction and is configured for receiving the secondary radiation and outputting an output signal,
wherein the optical exit axis of the light source (1) is substantially in parallel with the optical entry axis of the light sensor (2); and wherein the primary radiation (7) is provided conically as a primary beam cone, the measuring device further comprising:
- a further light sensor (12) which is arranged spaced apart from the light source (1) and/or the light sensor (2), and/or a further light source (12a) spaced apart from the light source (1), wherein at least a second measuring volume is provided by the primary radiation and a corresponding additional secondary radiation associated with the further light sensor, and/or by an additional primary radiation associated with the further light source and an additional secondary radiation associated with the light sensor, wherein the second measuring volume (11) is further from the light source or from the light sensor than the measuring volume, the apparatus further comprising:
- an evaluation means (16) for calculating the degree of crystallisation from parameters of the primary radiation and from the signals emitted in accordance with the secondary radiations (8) measured using the light sensors (2, 12), and/or from the parameters of the primary radiations and from the signal emitted in accordance with the secondary radiation (8) measured using the light sensor (2), wherein at least one second measuring volume is provided, either by the primary radiation and a corresponding additional secondary radiation associated with the further light sensor, or by an additional primary radiation associated with the further light source and an additional secondary radiation associated with the light sensor,
wherein the light source comprises a radiation generator for providing the primary radiation.

2. Apparatus (30) according to claim 1, wherein the measuring volume (9, 11) is defined by the intersection volume between the radiation region (7) of the light source (1) and the detection region (8) of the light sensor (2).

3. Apparatus (30) according to either of the preceding claims, wherein the light sensor (2) comprises a conical receiving region.

4. Apparatus (30) according to any of the preceding claims, wherein the light source (1) and/or the light sensor (2) is equipped with ray optics.

5. Apparatus (30) according to any of the preceding claims, wherein the light sensor (2) is configured to detect the or some of the backscattering of the primary radiation (7) reflected, re-emitted or refracted from the measuring volume (9, 11).

6. Apparatus (30) according to any of the preceding claims, wherein the light sensor (2) is arranged adjacently to the light source (1).

7. Apparatus (30) according to any of the preceding claims, wherein the light source (1) is connected by means of a fibre-optic connecting line (5) to a radiation generator (17) which generates the primary radiation and provides it to the light source,
and/or
is configured to emit incoherent light.

8. Apparatus (30) according to any of the preceding claims, wherein the light source (1) is arranged and accommodated together with the light sensor (2) in a common probe housing (22), wherein the probe housing comprises a housing tip (24) that tapers in a flat manner and/or is streamlined.

9. Apparatus (30) according to any of the preceding claims, wherein
- the light source (1) comprises a transmitting fibre (5), a glass rod or a glass plate, and/or
- the light sensor (2) comprises a receiving fibre (6), a glass rod or a glass plate.

10. Apparatus (30) according to any of the preceding claims, wherein the light source (1) and the light sensor (2) are surrounded by a sheathing (3, 4), wherein the sheathing (3) of the light source rests adjacently on the sheathing (4) of the light sensor.

11. Apparatus (30) according to any of the preceding claims, wherein the spacing between the light source (1) and the light sensor (2) is 0.5 mm or less, preferably 100 µm or less, further preferably 50 µm or less.

12. Apparatus (30) according to any of the preceding claims, the measuring device (30) further comprising
- a cleaning means (26) for cleaning the light source (1) and/or the light sensor (2).

13. Apparatus (30) according to any of the preceding claims, wherein the measuring volume (9, 11) is spatially limited in that the maximum penetration depth of the primary radiation is selected and/or adjusted to the medium by selecting the wavelength of the primary radiation used, wherein the wavelength of the primary radiation is preferably in the range of 800 to 1600 nm, particularly preferably in the range of 1100 to 1300 nm.

14. Method for controlling a crystallisation process of a medium (20), comprising the steps of:
- providing a medium (20) comprising a fluid dispersion medium and at least one disperse phase,
- inline measuring using the apparatus (30) according to any of claims 1 to 13, comprising
- emitting a primary radiation in a primary beam direction from the light source (1) into the dispersion, forming a conical radiation region (7),
- making the primary radiation incident in the dispersion, forming a spatially limited measuring volume (9, 11),
- generating a secondary radiation (8) in the measuring volume (9, 11),
- receiving at least some of the secondary radiation, generated in the measuring volume, by the light sensor (2) arranged outside the primary beam direction, in a detection region (8),
- further conducting the secondary radiation,
- generating a measurement series corresponding to the degree of crystallisation of the medium,
- evaluating the process state and/or the process change of the crystallisation process by means of the obtained measurement series,
- generating a state signal of the crystallisation process,
- consulting the state signal in the processing for controlling the crystallisation process.

## Revendications

1. Dispositif (30) destiné à délivrer le degré de cristallisation actuel d'un milieu (20), comprenant :
- un appareil de mesure (13) pour la détection du degré de cristallisation du milieu (20), l'appareil de mesure comprenant :
- une source de lumière (1) avec une zone d'émission destinée à sortir un rayonnement primaire (7) dans le milieu, dans lequel le rayonnement primaire est envoyé dans une direction de rayon primaire et sort de la source de lumière,
dans lequel la source de lumière est mise au point pour émettre le rayonnement primaire de telle sorte dans le milieu qu'un volume de mesure (9, 11) spatialement limité est fourni pour générer un rayonnement secondaire (8) dans le volume de mesure,
- un capteur de lumière (2) avec une zone de détection (8) destiné à recevoir au moins une partie du rayonnement secondaire généré dans le volume de mesure, dans lequel le capteur de lumière (2) est disposé en dehors de la direction de rayon primaire, et est mis au point pour recevoir le rayonnement secondaire et pour délivrer un signal de sortie,
dans lequel l'axe de sortie optique de la source de lumière (1) est sensiblement parallèle à l'axe d'entrée optique du capteur de lumière (2) ; et dans lequel le rayonnement primaire (7) est fourni sous forme conique en tant que cône de rayon primaire, l'appareil de mesure comprenant en outre :
- un autre capteur de lumière (12), lequel est disposé à distance de la source de lumière (1) et/ou du capteur de lumière (2) et/ou une autre source de lumière (12a) est tenue à distance de la source de lumière (1), dans lequel au moins un deuxième volume de mesure est fourni, par le rayonnement primaire et un rayonnement secondaire supplémentaire correspondant associé à l'autre capteur de lumière et/ou par un rayonnement primaire supplémentaire associé à l'autre source de lumière et un rayonnement secondaire supplémentaire associé au capteur de lumière, dans lequel le deuxième volume de mesure (11) est davantage éloigné de la source de lumière ou du capteur de lumière que le volume de mesure, le dispositif comprenant en outre :
- un système d'évaluation (16) destiné à calculer le degré de cristallisation à partir de paramètres du rayonnement primaire, ainsi qu'à partir de signaux délivrés de manière à correspondre aux rayonnements secondaires (8) mesurés avec les capteurs de lumière (2, 12) et/ou à partir des paramètres des rayonnements primaires ainsi qu'à partir du signal délivré de manière à correspondre au rayonnement secondaire (8) mesuré avec le capteur de lumière (2), dans lequel au moins un deuxième volume de mesure est fourni, soit par le rayonnement primaire et un rayonnement secondaire supplémentaire correspondant associé à l'autre capteur de lumière soit par un rayonnement primaire supplémentaire associé à l'autre source de lumière et un rayonnement secondaire supplémentaire associé au capteur de lumière,
dans lequel la source de lumière comprend un générateur de rayonnement pour fournir le rayonnement primaire.

2. Dispositif (30) selon la revendication 1, dans lequel le volume de mesure (9, 11) est défini par le volume de coupe entre la zone d'émission (7) de la source de lumière (1) et la zone de détection (8) du capteur de lumière (2).

3. Dispositif (30) selon l'une quelconque des revendications précédentes, dans lequel le capteur de lumière (2) présente une zone de réception de forme conique.

4. Dispositif (30) selon l'une quelconque des revendications précédentes, dans lequel la source de lumière (1) et/ou le capteur de lumière (2) sont équipés d'une optique de rayon.

5. Dispositif (30) selon l'une quelconque des revendications précédentes, dans lequel le capteur de lumière (2) est mis au point pour détecter la ou une partie de la rétrodiffusion du rayonnement primaire (7) provenant du volume de mesure (9, 11), dans lequel la rétrodiffusion comprend un rayonnement réfléchi, réémis ou réfracté depuis le volume de mesure.

6. Dispositif (30) selon l'une quelconque des revendications précédentes, dans lequel le capteur de lumière (2) est disposé de manière adjacente à la source de lumière (1).

7. Dispositif (30) selon l'une quelconque des revendications précédentes, dans lequel la source de lumière (1) est reliée au moyen d'un câble de connexion par fibre optique (5) à un générateur de rayonnement (17), lequel génère le rayonnement primaire et le fournit à la source de lumière, et/ou
est mis au point pour émettre de la lumière incohérente.

8. Dispositif (30) selon l'une quelconque des revendications précédentes, dans lequel la source de lumière (1) est disposée et logée conjointement avec le capteur de lumière (2) dans un boîtier de sonde (22) commun, dans lequel le boîtier de sonde présente une pointe de boîtier (24) convergeant à plat et/ou favorisant l'écoulement.

9. Dispositif (30) selon l'une quelconque des revendications précédentes, dans lequel
- la source de lumière (1) comprend une fibre d'envoi (5), une tige de verre ou une plaque de verre, et/ou
- le capteur de lumière (2) comprend une fibre de réception (6), une tige de verre ou une plaque de verre.

10. Dispositif (30) selon l'une quelconque des revendications précédentes, dans lequel la source de lumière (1) et le capteur de lumière (2) sont entourés par une gaine (3, 4), dans lequel la gaine (3) de la source de lumière repose de manière adjacente à la gaine (4) du capteur de lumière.

11. Dispositif (30) selon l'une quelconque des revendications précédentes, dans lequel la distance entre la source de lumière (1) et le capteur de lumière (2) est inférieure ou égale à 0,5 mm, de manière préférée est inférieure ou égale à 100 µm, de manière davantage préférée est inférieure ou égale à 50 µm.

12. Dispositif (30) selon l'une quelconque des revendications précédentes, l'appareil de mesure (30) comprenant en outre
- un système de nettoyage (26) destiné à nettoyer la source de lumière (1) et/ou le capteur de lumière (2).

13. Dispositif (30) selon l'une quelconque des revendications précédentes, dans lequel le volume de mesure (9, 11) est spatialement limité en ce que la profondeur de pénétration maximale du rayonnement primaire est choisie et/ou est adaptée au milieu par la sélection de la longueur d'onde du rayonnement primaire utilisé, dans lequel la longueur d'onde du rayonnement primaire se situe de manière préférée dans la plage de 800 à 1600 nm, de manière particulièrement préférée dans la plage de 1100 à 1300 nm.

14. Procédé de commande d'un processus de cristallisation d'un milieu (20), avec les étapes :
- de fourniture d'un milieu (20) comprenant un milieu de dispersion fluide et au moins une phase dispersée,
- de mesure en ligne avec le dispositif (30) selon l'une quelconque des revendications 1 à 13, comprenant
- l'envoi d'un rayonnement primaire dans une direction de rayon primaire depuis la source de lumière (1) dans la dispersion en réalisant une zone d'émission (7) de forme conique,
- l'incidence du rayonnement primaire dans la dispersion en réalisant un volume de mesure (9, 11) spatialement limité,
- la génération d'un rayonnement secondaire (8) dans le volume de mesure (9, 11),
- la réception d'au moins une partie du rayonnement secondaire généré dans le volume de mesure par le capteur de lumière (2) disposé en dehors de la direction de rayon primaire dans une zone de détection (8),
- le transfert du rayonnement secondaire,
- la génération d'une série de mesures correspondant au degré de cristallisation du milieu,
- l'évaluation de l'état de processus et/ou de la modification de processus du processus de cristallisation au moyen de la série de mesures obtenue,
- la génération d'un signal d'état du processus de cristallisation,
- la prise en compte du signal d'état lors du traitement de processus pour commander le processus de cristallisation.
